# EUROPEAN PATENT APPLICATION

(11) **EP 4 776 619 A1**
(43) Date of publication of application: **15.07.2026**
(21) Application number: 25315011.4
(22) Date of filing: 10.01.2025
(51) Int. Cl.: H04N 19/13, H04N 19/18, H04N 19/70, H04N 19/91

(54) **METHOD AND APPARATUS FOR PROCESSING A PICTURE USING CONTINUED CONTEXT CODING OF COEFFICIENTS OF A BLOCK OF THE PICTURE**

(71) Applicant: Beijing Xiaomi Mobile Software Co., Ltd., Beijing Beijing 100085 (CN)
(72) Inventor: Abdoli, Mohsen, Beijing, 100085 (CN); Plowman, Frank, Beijing, 100085 (CN); Ghaznavi Youvalari, Ramin, Beijing, 100085 (CN); Tissier, Alexandre, Beijing, 100085 (CN)
(74) Representative: Zimmermann, Tankred Klaus

(57) **Abstract**

A method of processing one or more blocks of a picture is described. The method includes context mode level coding at least a part of one or more or all coefficients in a block in accordance with a context budget. The context mode level coding is continued when the context budget is exhausted.

## Description

### Technical Field

The present disclosure generally relates to the field of encoding/decoding pictures, images or videos, and embodiments of the present disclosure concern improvements regarding a coding of coefficients of a block of a picture, like transform skip coefficients or transform coding coefficients. More specific embodiments of the present disclosure relate to the processing of a picture using context mode level coding at least a part of one or more or all coefficients in a block in accordance with a context budget, and continuing the context mode level coding when the context budget is exhausted.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For encoding and decoding a picture, a state-of-the-art process for coding coefficients, e.g., of a Coefficient Group (CG) obtained by decomposing a Transform Unit (TU), starts with context coding the coefficients as long as a context budget is not exhausted. Once context budget is exhausted, the coefficients are continued to be coded using non-context coding, e.g., a Rice mode., which may not be optimal in terms of an achievable bit rate for coding the coefficients..

Thus, there is a need to provide further improvements for processing a picture, an image or a video, e.g., when encoding and/or decoding of the picture, the image or the video.

### Summary

The present disclosure provides a method of processing one or more blocks of a picture, the method comprising:
context mode level coding at least a part of one or more or all coefficients in a block in accordance with a context budget, wherein the context mode level coding is continued when the context budget is exhausted.

Optionally, in accordance with a first mode, the context mode level coding is continued when, at a start of the coding of the block, the context budget is not yet exhausted but is not sufficient to have all coefficients in the block context-coded.

Optionally, wherein the one or more or all coefficients in the block are binarized in accordance with a used codec, and the one or more or all coefficients are context-coded without switching to non-context mode level coding, like a Rice-mode.

Optionally,
an absolute value of a coefficient is a coefficient level, wherein the coefficient level is binarized into a plurality of syntax element flags and possibly a remaining-level value, and wherein each of the plurality of syntax element flags is context-coded using an associated context, like a Context-Adaptive Binary Arithmetic Coding (CABAC) context model, and
the plurality of syntax element flags comprises two or more of the following:
   - a significance flag (sig-Flag) indicating that a coefficient is significant when it is a non-zero coefficient,
   - a greater-than-one flag (gt1),
   - a parity flag,
   - one or more greater-than-X flags (gtX), where X=2,4,6,8

Optionally,
the context mode level coding is continued for all syntax element flags of the coefficients, or
the context mode level coding is continued only for a subset of the syntax element flags of the coefficients.

Optionally, wherein the context mode level coding is continued only for one or more of the plurality of syntax element flags, e.g., the significance flag and/or the sign flag, which are more important than other ones of the plurality of syntax element flags, e.g., the greater-than-one flag (gt1), the parity flag and the greater-than-X flags (gtX).

Optionally, in accordance with a second mode, the context mode level coding is continued when the context budget is exhausted or is below a predefined threshold before the coding of the block starts.

Optionally, the one or more or all coefficients in the block are binarized such that a coefficient is decomposed into a first part and a second part, wherein the first parts of the one or more or all coefficients are context-coded, and wherein the second parts of the one or more or all coefficients are non-context mode level coded, e.g., in a Rice-mode.

Optionally,
an absolute value of a coefficient is a coefficient level, wherein the coefficient level is binarized into one or more syntax element flags and a remaining level, and wherein the first part comprises the one or more syntax element flags and the second part comprises the remaining level, and
the one or more syntax element flags comprises one or more of the following:
- a significance flag (sig-Flag) indicating that a coefficient is significant when it is a non-zero coefficient,
- a greater-than-one flag (gt1),
- a parity flag,
- one or more greater-than-X flags (gtX), where X=2,4,6,8

Optionally, the one or more syntax element flags comprise:
- the significance flag, or
- the significance flag and the sign flag, or
- the significance flag and the greater-than-one flag.

Optionally,
the context mode level coding is continued for all syntax element flags of the coefficients, or
the context mode level coding is continued only for a subset of the syntax element flags of the coefficients.

Optionally, for processing the block, only one of the first mode and the second mode or both the first mode and the second mode are enabled, wherein
- the first mode is selected for processing the block, when, upon starting the processing or coding of the block, the context budget is not yet exhausted but is not sufficient to have all coefficients in the block context-coded, and
- the second mode is selected for processing the block, when, upon starting the processing or coding of the block, the context budget is exhausted or is below a predefined threshold.

Optionally,
the context mode level coding is continued until a number (numCtxBin) of context bins defined by the context budget is exceed by a certain number of context bins, and
the certain number is
- a fixed number N of context bins, with N being an integer, or
- a multiple M of the number (numCtxBin) of context bins defined by the context budget, with M being an integer or a fractional number.

The present disclosure provides a non-transitory computer-readable storage medium comprising instructions which, when executed by a computer, cause the computer to carry out the method of any one of the preceding claims.

The present disclosure provides an apparatus of processing one or more blocks of a picture, the apparatus comprising:
a processing module, wherein the processing module is configured to context mode level code at least a part of one or more or all coefficients in a block in accordance with a context budget, wherein the context mode level coding is continued when the context budget is exhausted.

The technical solutions provided according to embodiments of the present disclosure have the following beneficial effects.

A state-of-the-art process for coding coefficients of a CG starts with context coding the coefficients as long as the context budget is not exhausted. Once context budget is exhausted, the coefficients are continued to be coded using non-context coding, e.g., a Rice mode. While this conventional process may have some advantages regarding decoder side throughput, it has been found that a downside is that the coding of, e.g., transform skip coefficients or transform coding coefficients is more expensive in terms of bitrate.

Embodiments of the present disclosure address the above shortcomings in the prior art by providing an approach which, other than the prior art approaches, allows to continue using the context coding even when the context budget is exhausted, thereby improving the bit rate.

The present disclosure is advantageous because, other than in conventional approaches allowing the continued context coding of the coefficients reduces the bit rate, thereby improving the performance of the process.

It is to be understood that the content described in this section is not intended to identify key or critical features of the embodiment of the present disclosure, nor is it intended to limit the scope of the present disclosure. Other features of the present disclosure become readily apparent from the following description.

### Brief Description of the Drawings

The drawings are explanatory and serve to explain the present disclosure, and are not to be construed to limit the present disclosure to the illustrated embodiments.
- Fig. 1: is a block diagram of a conventional video encoder,
- Fig. 2: is a block diagram of a conventional video decoder,
- Fig. 3: illustrates the partitioning of a 16x16 TU into 16 CGs of size 4x4, and a scanning of a CG using a diagonal scan order;
- Fig. 4: illustrates a diagram of a state-of-the-art budget-constrained context-Rice-coding for level coding,
- Fig. 5: illustrates a flow diagram of a method of processing one or more blocks of a picture in accordance with embodiments of the present disclosure,
- Fig. 6: illustrate a diagram of the over-budget context mode for level coding (first mode) in accordance with an embodiment;
- Fig. 7: illustrates a diagram of an over-budget significance-flag context-Rice mode for level coding (second mode) in accordance with embodiments of the present disclosure,
- Fig. 8: illustrates a flow diagram of a method for decoding an encoded data stream in accordance with embodiments of the present disclosure,
- Fig. 9: illustrates a flow diagram of a method for encoding a picture into an encoded data stream in accordance with embodiments of the present disclosure,
- Fig. 10: illustrates a block diagram of an apparatus of processing one or more blocks of a picture in accordance with embodiments of the present disclosure,
- Fig. 11: illustrates a block diagram of a decoder for decoding an encoded data stream in accordance with embodiments of the present disclosure,
- Fig. 12: illustrates a block diagram of an encoder for encoding a picture into an encoded data stream in accordance with embodiments of the present disclosure,
- Fig. 13: illustrates a data stream in accordance with embodiments of the present disclosure, and
- Fig. 14: illustrates a block diagram illustrating an electronic device according to embodiments of the present disclosure.

### Detailed Description

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure: Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

### Standard Video Coder

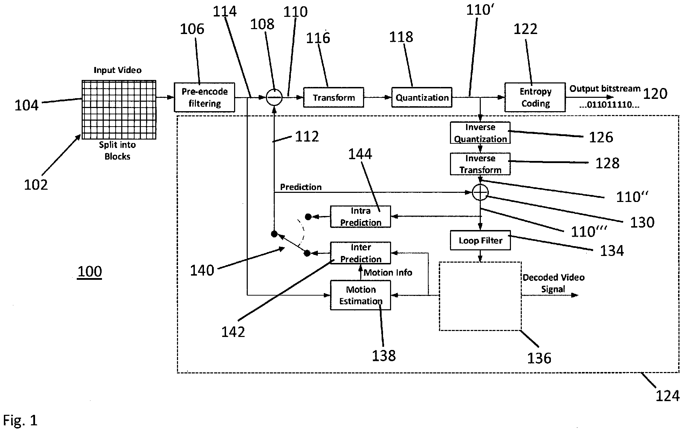

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

### Standard Video Decoder

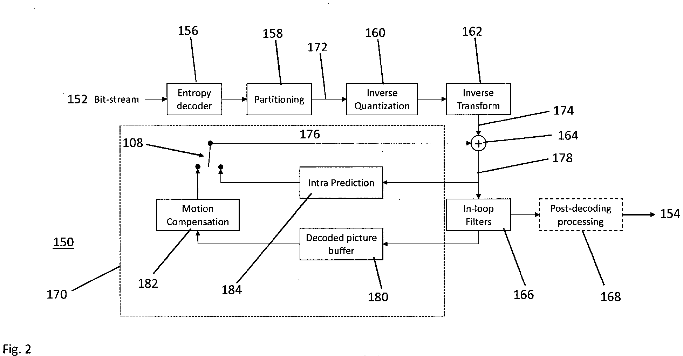

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128x128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution.

### Transform coding in VVC .

In VVC, large block-size transforms, up to 64×64 in size, are enabled, which is primarily useful for higher resolution video, e.g., 1080p and 4K sequences. High frequency transform coefficients are zeroed out for the transform blocks with a size (width or height, or both width and height) equal to 64, so that only the lower-frequency coefficients are retained. For example, for a M×N transform block, with M as the block width and N as the block height, when M is equal to 64, only the left 32 columns of transform coefficients are kept. Similarly, when N is equal to 64, only the top 32 rows of transform coefficients are kept. When a transform skip mode is used for a large block, the entire block is used without zeroing out any values. In addition, a transform shift is removed in the transform skip mode.

### Transform Skip (TS) coding

Transform Skip (TS) is a technique used in video coding standards, like HEVC and VVC, to improve the compression efficiency by skipping the transform stage (see, e.g., 116 in Fig. 1) for certain prediction modes. In traditional video coding, each block of pixels undergoes a transform operation (e.g. DCT) before quantization and entropy coding (see, e.g., 118 and 122 in Fig. 1). However, in TS mode, the transform stage is bypassed for specific prediction modes, allowing the encoder to directly quantize the residual signal without transformation. This approach is beneficial for blocks where the residual signal, after prediction, is small or close to zero so that applying a transform may not yield significant compression gains while introducing unnecessary computational overhead. By skipping the transform, the encoder may reduce the complexity and the bitrate overhead associated with the transform stage, which, in turn, leads to an improved compression efficiency. This is especially the case in scenarios with low residual energy or when the residual signal is already well-predicted, e.g., by the motion compensation process (see, e.g., 138 in Fig. 1). The decision to apply the TS mode is usually adaptive and depends on the characteristics of the block and the coding context determined by the encoder.

### Coefficient coding in TS mode

### Transform Unit (TU) vs. Coefficient Group (CG)

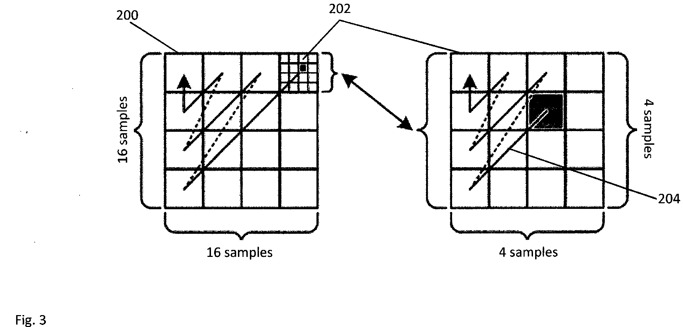

A Transform Unit (TU) is decomposed into Coefficient Groups (CGs) before coding. Typically this is performed by dividing a rectangular TU into a plurality of CGs of constant size of 4x4 pixels. Fig. 3 illustrates the partitioning of a 16x16 TU 200 into 16 CGs 204 of size 4x4, and the scanning of a CG using a diagonal scan order 204. Once the CGs 202 are defined, they are scanned (typically by the diagonal scan order 204) to code the individual coefficients. Each CG 202 is associated with a CG-significance-flag that is coded to indicate whether there is at least one significant coefficient within that CG 202.

### Context budget

For coding the CG coefficients, at the TU-level, a value of a context budget numCtxBin is set. The context budget serves as a budget to determine a maximum number of bins that may be CABAC context coded. For example, in VVC and ECM, the context budget is determined at the TU-level and as a function of the TU size.

### Budget-constrained context-Rice mode for level-coding

In this disclosure the term "Level" is referred to as an absolute value of a coefficient, and level-coding methods refer to algorithms defining two aspects: (A) how a coefficient level is binarized and (B) how the bins after the binarization are coded.

In the state-of-the-art codecs (e.g. VVC, ECM), a method referred to as budget-constrained context-Rice-coded method is used. The budget-constrained context-Rice level-coding method includes two internal sub-methods: *context mode* and *Rice mode.* The choice between the two sub-methods is purely based on whether the number of CABAC contexts used for current Transform Unit (TU) has exceed a certain budget, e.g. , the a context budget numCtxBin. If the budget is not exceeded, the level-coding method uses the context mode, otherwise, the level-coding method switches to the Rice mode which does not use any CABAC contexts.

When the context mode is used, for a given coefficient level, i.e., for the absolute value of the coefficient, a binarization is performed or applied that generates the following syntax element flags from the level:
- a significance flag (sig-Flag),
- a greater-than-one flag (gt1),
- a parity flag,
- one or more greater-than-X flags (gtX), where X=2,4,6,8.

In addition to the above syntax elements, a sign of a coefficient level (negative or positive) may also be CABAC coded.

The level-coding of a coefficient level using the context mode is proceeded by coding the above bin or syntax element flags using their associated CABAC context model. In the above process, the value of numCtxBin is decimated every time one of the syntax element flags is CABAC coded. Therefore, at some point during the context mode level-coding, the context bin may run out of budget, meaning, e.g., that numCtxBin is not sufficient to code all syntax elements associated with one coefficient. If that happens, the Rice mode is called and used for the rest of the coefficients.

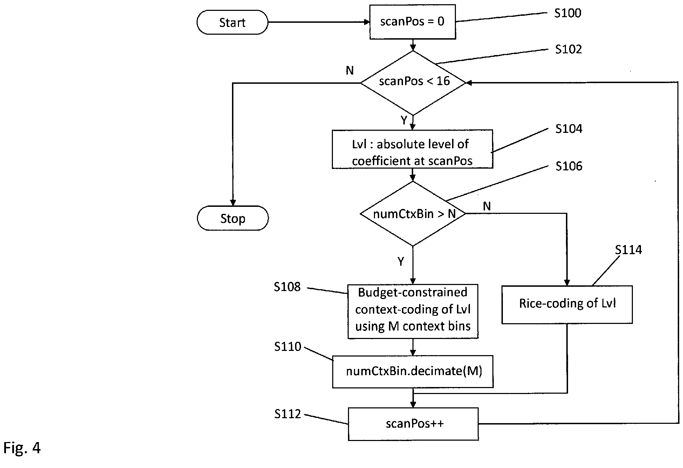

Fig. 4 illustrates a diagram of a state-of-the-art budget-constrained context-Rice-coding for level coding. After the process starts, assuming a CG 202 as depicted in Fig. 3 having a size of 4x4, i.e., 16 scan positions 0 to 16, initially, the current scan position scanPos is set S100 to zero. Then it is determined S102 whether or not the entire CG has been processed, i.e., whether scanPos is less than 16. If no, all scan positions have been processed and the processing of the current block or CG terminates. The process may be repeated for a next CG. If yes, Lvl, the absolute level of coefficient at the current scan position scanPos is obtained S104. Then it is determined S106 whether the context budget numCtxBin is sufficient for context coding Lvl, i.e., whether there is a sufficient number N of context bins left in the budget for context coding Lvl. If yes, Lvl is budget-constrained context-coded S108 using M context bins, and the number of context bins in the context budget is decremented or decimated S110 by the number M of context bins used for coding Lvl. Then the scan position is incremented S112 by one and the process returns to S102.

If it is determined at S106 that the context budget numCtxBin is not sufficient for context coding Lvl, the process switches to the Rice mode and Lvl is Rice-coded S110. Then, the scan position is incremented S112 by one and the process returns to S102.

It is noted that there is another condition triggering a switching to the Rice mode. If the above flags are not sufficient to represent the level, Lvl, of coefficient, e.g., when the coefficient is greater than 8, a remaining level is determined or computed and coded using the Rice mode. In that case the switching to the Rice mode here has nothing to do with running out of the context budget, but is related to the fact that very large numbers are coded more efficiently by the binarization used in the Rice mode.

### Over-budget context coding

In the current design of ECM and VVC, if the context coding process normatively runs out of context bin budget, the coding switches from the level-coding method in the transform coding as well as in the transform skip coding to the Rice-coding with no CABAC context coding. Although this is intended to guarantee a certain decoder-side throughput, the downside is that the coding of the transform skip and transform coding coefficients becomes more expensive in terms of bitrate. Stated differently, a state-of-the-art process for coding coefficients of a CG starts with context coding the coefficients as long as the context budget is not exhausted. Once context budget is exhausted, the coefficients are continued to be coded using non-context coding, e.g., a Rice mode. While this conventional process may have some advantages regarding decoder side throughput, a downside is that the coding of transform skip coefficients or transform coding coefficients is more expensive in terms of bitrate.

Embodiments of the present disclosure address the above shortcomings in the prior art by providing an approach which, other than the prior art approaches, allows to continue using the context coding even when the context budget is exhausted, thereby improving the bit rate.

The present disclosure is advantageous because, other than in conventional approaches allowing the continued context coding of the coefficients reduces the bit rate, thereby improving the performance of the process.

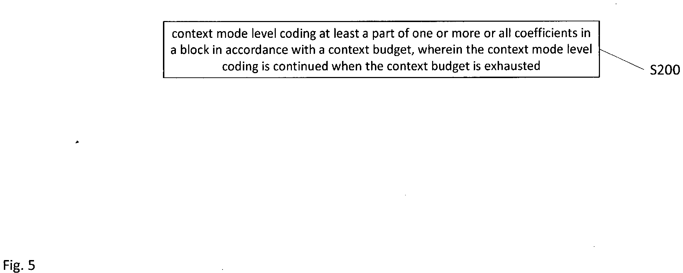

Fig. 5 illustrates a flow diagram of an embodiment of a method of processing one or more blocks of a picture. The method includes:
S200: Context mode level coding at least a part of one or more or all coefficients in a block in accordance with a context budget, and the context mode level coding is continued when the context budget is exhausted.

Thus, embodiments of the present disclosure introduce a state referred to as the over-budget mode for level-coding in the Coefficient Groups (CGs), where the CG continues or keeps coding coefficients using context mode level coding for a limited duration or while after the context budget in numCtxBin runs out or is exhausted. Stated differently,
- at least a part of one or more or all coefficients in a block, like a CG, are context mode level coded independent of a context budget being exhausted, or
- at least a part of one or more or all coefficients in a block, like a CG, are context mode level coded in accordance with a context budget, and the context mode level coding is continued when the context budget is exhausted, or
- context mode level coding is continued independent of the context budget being sufficient to have the one or more or all coefficients context-coded, or
- context mode level coding is continued when the context budget is or becomes insufficient to have one or more of the coefficients context-coded.

In accordance with embodiments, the embodiments described herein are applicable to both transform coding and transform skip coding.

In accordance with embodiments, two new level-coding methods are provided, namely:
- over-budget context mode level-coding, and
- over-budget significance-flag context-Rice mode level-coding

While state-of-the-art level-coding uses a budget-constrained context mode, embodiments of the present disclosure provide methods that are different to the state-of-the-art method in that they may at least limitedly use CABAC contexts despite the context bin having run out of budget.

In this disclosure, the term "running out of context bin budget" is used in a broader sense when compared to the state-of-the-art. In the state of the art, this refers, e.g., to the value of the numCtxBin variable becoming zero. On the other hand, in this disclosure, the numCtxBin is considered to be exhausted or run out of budget when its value falls below a predefined threshold, Thr. This is also referred to herein as an "out-of budget" state, i.e., as a state in which there is still some budget left. Thus, the definition of the "out-of budget" state is flexible yet depending on the value of the numCtxBin variable. A CG, dependent on being in or out of the out-of budget state, may trigger the inventive methods. In accordance with embodiments, when the CG is not in the out-of budget state but there is not sufficient budget for context-coding all coefficients in the CG the over-budget context mode level-coding may be triggered, which is described in more detail below. In accordance with other embodiments, when the CG is in the out-of budget state the over-budget significance-flag context-Rice mode level-coding may be triggered, which is described in more detail below.

In this disclosure, the syntax elements that are subjected to the context bin budget in numCtxBin are the same set of syntax elements that are concerned by the context bin budget in the underlying codec. For instance, in ECM, the concerned syntax elements are those listed above. However, the present disclosure is not limited to such embodiments. In accordance with other embodiments, the methods described in this disclosure may also be applied to cases where the set of syntax elements is modified.

In accordance with embodiments of the present disclosure, the coefficient coding of, e.g., the Transform Skip (TS) or the Transform Coding, is allowed to operate in an over-budget state, at least for limited residual coefficients. In this state, regardless of whether or not the context budget numCtxBin is still available, the TS or Transform Coding algorithm keeps using CABAC contexts for coding level-related syntax elements which is conventionally restricted by the context budget numCtxBin.

In accordance with embodiments of the present disclosure, the duration of staying in the over-budget is exactly the same as the number of coefficients in a Coefficient Group (CG).

In accordance with embodiments of the present disclosure, a first mode or first over-budget level-coding method uses the same binarization as in the underlying codec, however, all coefficients in a CG are context-coded by never switching to another level-coding method, like the Rice-mode.

In accordance with embodiments of the present disclosure, a second mode or second over-budget level-coding method changes the binarization method by decomposing a coefficient level into at least the significance-flag and the remaining level, i.e., the remaining flags. Then, the over-budget method uses the CABAC context for the significance-flag, regardless of the context bin budget numCtxBin left, and the remaining level is coded in the Rice mode without using any CABAC context.

In accordance with embodiments of the present disclosure, the first and the second over-budget level-coding methods are both enabled. In this case, for a given CG, the proper level-coding method is selected based on certain eligibility conditions described below.

In accordance with embodiments of the present disclosure, only one of the first and second over-budget level-coding methods is enabled.

In accordance with embodiments of the present disclosure, the codec may impose certain constraints for using an over-budget level coding, when a CG is eligible for the over-budget method. In accordance with embodiments, the over-budget context coding is allowed to be applied until a certain number or threshold above the defined context budget numCtxBin. The threshold may be fixed, e.g., numCtxBin + N, where N is the constraint value for going above the budget context of coding bins, with N being an integer number. The threshold may also be defined based on a value of numCtxBin, e.g., numCtxBin + M×numCtxBin, where M×numCtxBin is the constraint value for going over the budget context of coding bins, with M being an integer or a fractional number.

In accordance with embodiments of the present disclosure, the constraint may be applied to all flags of a coefficient in a CG when the inventive over-budget context coding method is used, or it may be applied to only a subset of the flags of a coefficient flags in the CG. In the latter case, the constraint value may be imposed only on less important flags such as gt1, gtX and parity flags, however, more important flags such as significance and sign flags may have no constraints.

### Over-budget context mode for level-coding (first mode)

In accordance with embodiments, an over-budget context-coded method or first mode is provided which is used for at most one CG or block. There are two eligibility conditions to enable the use of this method for a CG:
1. numCtxBin did not run out of budget before starting the coding the CG. In other words, numCtxBin ≥ Thr for an arbitrary non-negative value of Thr.
2. numCtxBin is not sufficient to ensure that all coefficients in the current CG are context-coded.

The above conditions mean that the budget constrained level-coding in the state-of-the-art would start level-coding of a CG in the context mode, however, switch to the Rice mode at least for one coefficient before the end of the CG. Embodiments of the present disclosure allow using for such CGs the over-budget level-coding. This means that, if a running out or exhaustion of context bin budget happens during the process of coding a CG, the level-coding method is not switched to Rice mode before the end of the current CG. In other words, if coding a CG is started in the over-budget context mode, then the entire coefficients in the CG are context-coded, even when running out of context budget.

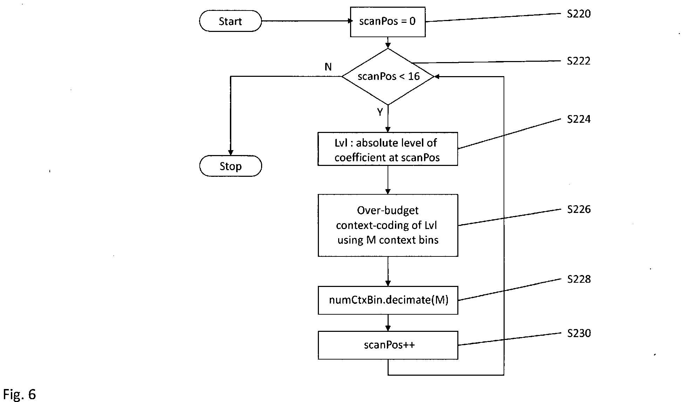

Fig. 6 illustrate a diagram of the over-budget context mode for level coding in accordance with an embodiment. After the process starts, assuming a CG 202 as depicted in Fig. 3 having a size of 4x4, i.e., 16 scan positions 0 to 16, initially, the current scan position scanPos is set S220 to zero. Then it is determined S222 whether or not the entire CG has been processed, i.e., whether scanPos is less than 16. If no, all scan positions have been processed and the processing of the current block or CG terminates. The process may be repeated for a next CG. If yes, Lvl, the absolute level of coefficient at the current scan position scanPos is obtained S224. Then, Lvl is over-budget context-coded S226 using M context bins, and the number of context bins in the context budget is decremented or decimated S228 by the number M of context bins used for coding Lvl. Then the scan position is incremented S230 by one and the process returns to S222.

As may be seen, even though the level-coding never switches to the Rice mode, the value of numCtxBin is still decimated after each use of CABAC contexts so that, in accordance with this embodiment, the over-budget mode applies only to one CG. Stated differently, by the decimation numCtxBin runs out of budget before starting the coding a next or following CG so that the above mentioned first eligibility condition is no longer met for any following CG. In the absence of the decimation, the number numCtxBin remains the same so that a next CG will go through the same process, which, in this embodiment, is limited to at most one CG.

### Over-budget significance-flag context-Rice mode for level-coding (second mode)

In accordance with embodiments, an over-budget significance-flag context-Rice mode or second mode is provided. This level-coding method is also applied at the CG-level, meaning that it is either used for all or none of the coefficients in a given CG. There is a single eligibility condition to use this over-budget level-coding method:
- numCtxBin already run out of budget before starting the coding of the current CG. In other words, numCtxBin < Thr.

If the above condition makes a CG eligible for the over-budget significance-flag context-Rice mode, a new binarization is used for all coefficients in that CG. More specifically, the new binarization comprises decomposing the coefficient level into two parts, namely:
Part 1: Significance flag: a coefficient is significant if it is non-zero.
Part 2: Remaining level; if a coefficient is significant, then the remaining level of the coefficient is its absolute value minus one.

Once binarized, each coefficient is partly coded in the context mode and partly in the Rice mode. More specifically, the significance flag of a coefficient is coded using CABAC contexts, and the remaining level of the coefficient is coded using non-context coding, e.g., by using the Rice mode.

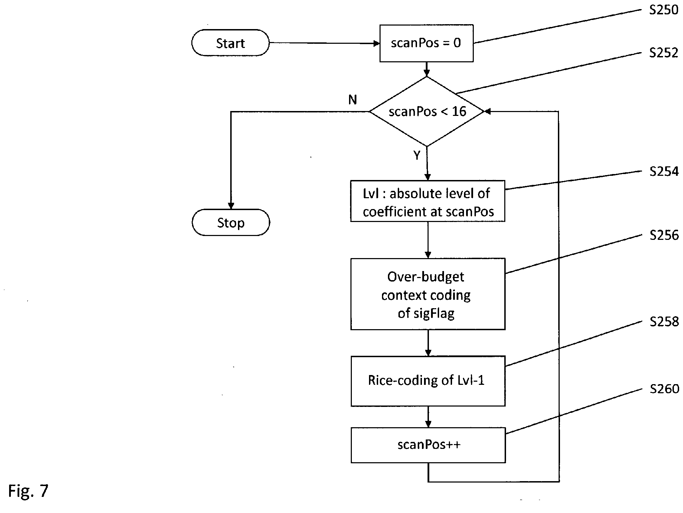

Fig. 7 illustrates a diagram of an over-budget significance-flag context-Rice mode for level coding in accordance with embodiments of the present disclosure. After the process starts, assuming a CG 202 as depicted in Fig. 3 having a size of 4x4, i.e., 16 scan positions 0 to 16, initially, the current scan position scanPos is set S250 to zero. Then it is determined S252 whether or not the entire CG has been processed, i.e., whether scanPos is less than 16. If no, all scan positions have been processed and the processing of the current block or CG terminates. The process may be repeated for a next CG. If yes, Lvl, the absolute level of coefficient at the current scan position scanPos is obtained S254. Then, the significance flag of Lvl is over-budget context-coded S526 and Lvl-1, i.e., the remaining flags, are Rice-coded S258. Then the scan position is incremented S230 by one and the process returns to S252.

It is note that the above binarization method is an embodiment of a mixed use of context mode and Rice mode. In accordance with other embodiments, different binarization methods may be used in order to enable both context mode and Rice mode for level-coding. For example, in accordance with an embodiment, the context mode may be used for the significance flag and the sign flag, while the Rice mode is used for the remaining flags/levels. In another embodiment, the context mode may be used for the significance flag and the greater-than-one flag, while the Rice mode is used for the remaining levels/flags following or after the greater-than-one flag.

In accordance with embodiments, using the inventive approach may be signaled in a bitstream using a certain syntax. For TS coding, the syntax may be as follows:

| | **Descriptor** |
|---|---|
| ... | |
| **sps_ts_enabled_flag** | **u(1)** |
| if (sps_ ts_enabled_flag) | |
| **sps_ts_overbudget_flag** | **u(1)** |
| ... | |
| | |

with
- sps_ts_enabled_flag indicating whether TS coding is used, and
- sps_ts_overbudget_flag indicating whether TS coding uses the inventive approach described herein.

### Decoding Method

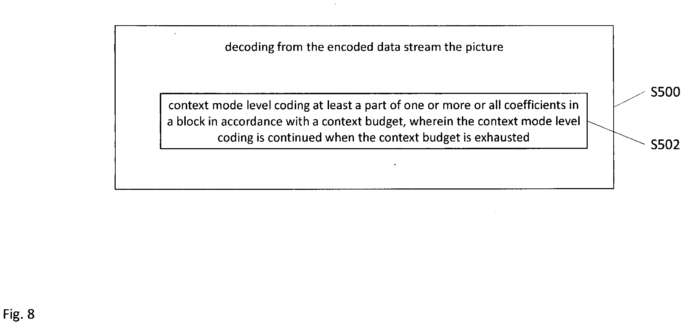

Fig. 8 illustrates a flow diagram of a method for decoding an encoded data stream, the encoded data stream including data representing a picture. The method includes the following:
S500: Decoding from the encoded data stream the picture, wherein decoding the picture comprises context mode level coding S502 at least a part of one or more or all coefficients in a block in accordance with a context budget, and the context mode level coding is continued when the context budget is exhausted.

### Encoding Method

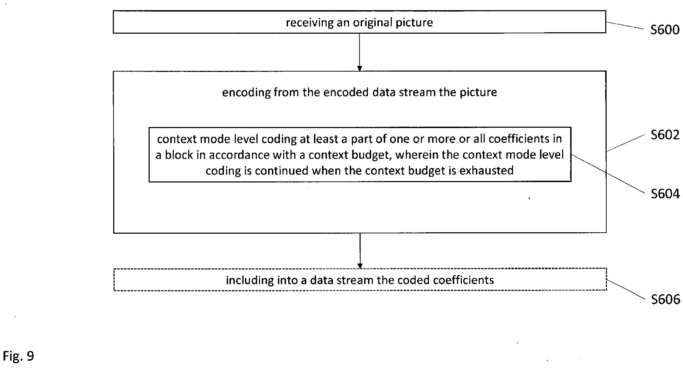

Fig. 9 illustrates a flow diagram of a method for encoding a picture into an encoded data stream. The encoded data stream includes data representing the picture and the method includes the following:
S600: Receiving an original picture.
S602: Encoding the picture into the encoded data stream, wherein encoding the picture comprises context mode level coding S604 at least a part of one or more or all coefficients in a block in accordance with a context budget, and the context mode level coding is continued when the context budget is exhausted.

Optionally, the method comprises including S606 into the data stream or bitstream the coded coefficients.

### Further embodiments

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

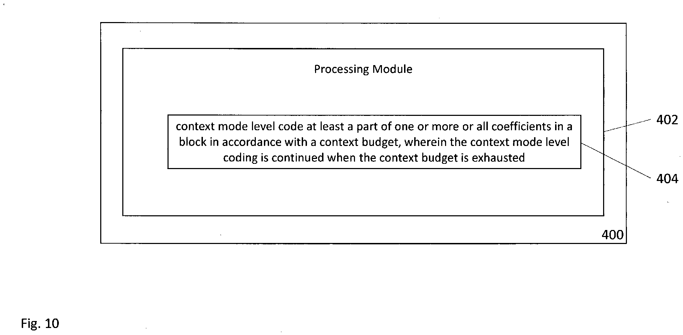

Fig. 10 illustrates a block diagram of an apparatus 400 of predicting one or more blocks of a picture in accordance with embodiments of the present disclosure. The apparatus 400 includes a processing module 402. The processing module is configured to context mode level code 404 at least a part of one or more or all coefficients in a block in accordance with a context budget, and the context mode level coding is continued when the context budget is exhausted.

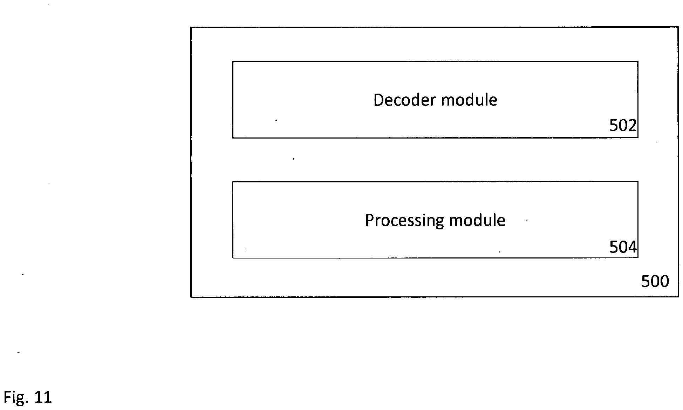

Fig. 11 illustrates a block diagram of a decoder for decoding an encoded data stream in accordance with embodiments of the present disclosure. The encoded data stream includes data representing a picture. The decoder 500 includes the following modules:
502: A decoder module configured to decode from the encoded data stream the picture.
504: A processing module, e.g., a prediction module 170 as depicted in Fig. 2. The processing module 502 is configured to operate in accordance with embodiments of the present disclosure. For example, the processing module 502 includes an apparatus as described with reference to Fig. 10.

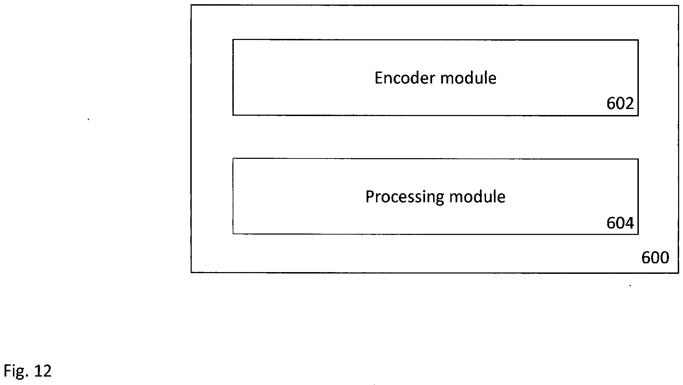

Fig. 12 illustrates a block diagram of an encoder for encoding a picture into an encoded data stream in accordance with embodiments of the present disclosure. The encoded data stream includes data representing the picture. The encoder 600 includes the following modules:
602: An encoder module configured to receive the original picture and to encode the picture into the encoded data stream.
604: A processing module, e.g., a prediction module 124 as depicted in Fig. 1. The processing module 602 is configured to operate in accordance with embodiments of the present disclosure. For example, the processing module 502 includes an apparatus as described with reference to Fig. 10.

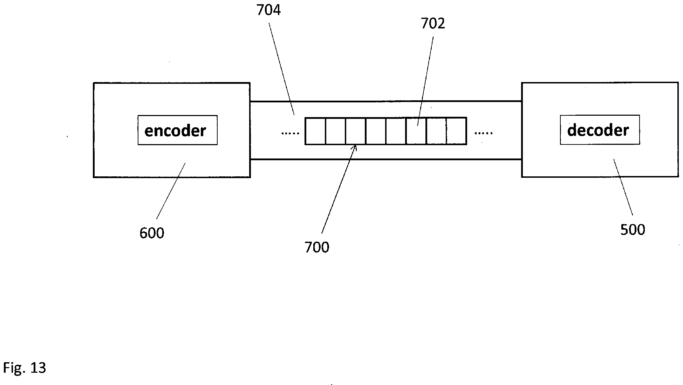

Fig. 13 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 704, like cable or a radio link, and the decoder 500 decodes from the data stream 700 the picture. The data stream includes coefficients 702 encode in accordance with embodiments of the present disclosure.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

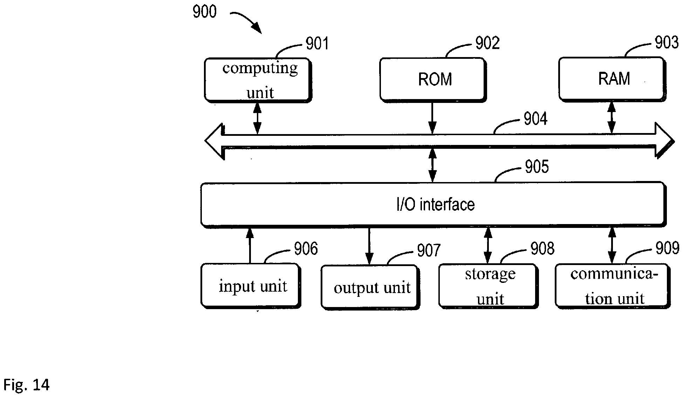

Fig. 14 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:
A 1^{st} embodiment provides a method of processing one or more blocks of a picture, the method comprising:
   context mode level coding at least a part of one or more or all coefficients in a block in accordance with a context budget, wherein the context mode level coding is continued when the context budget is exhausted.
A 2^{nd} embodiment provides the method of the 1^{st} embodiment, wherein, in accordance with a first mode, the context mode level coding is continued when, at a start of the coding of the block, the context budget is not yet exhausted but is not sufficient to have all coefficients in the block context-coded.
A 3^{rd} embodiment provides the method of the 2^{nd} embodiment, wherein the context mode level coding is continued when, at the start of the coding of the block, the context budget:
   - is above a predefined threshold, and
   - is not sufficient to have all coefficients in the block context-coded.
A 4^{th} embodiment provides the method of the 2^{nd} or 3^{rd} embodiment, wherein the one or more or all coefficients in the block are binarized in accordance with a used codec, and the one or more or all coefficients are context-coded without switching to non-context mode level coding, like a Rice-mode.
A 5^{th} embodiment provides the method of any one of the 2^{nd} to 4^{th} embodiments, wherein, following the context mode level coding of one coefficient in the block, the context budget is decimated.
A 6^{th} embodiment provides the method of the 5^{th} embodiment, wherein the context budget is decimated by a number (M) of context bins used for context mode level coding the one coefficient.
A 7^{th} embodiment provides the method of any one of the 2^{nd} to 6^{th} embodiments, wherein an absolute value of a coefficient is a coefficient level, wherein the coefficient level is binarized into a plurality of syntax element flags and possibly a remaining-level value, and wherein each of the plurality of syntax element flags is context-coded using an associated context, like a Context-Adaptive Binary Arithmetic Coding (CABAC) context model.
An 8^{th} embodiment provides the method of the 7^{th} embodiment, wherein the plurality of syntax element flags comprises two or more of the following:
   - a significance flag (sig-Flag) indicating that a coefficient is significant when it is a non-zero coefficient,
   - a greater-than-one flag (gt1),
   - a parity flag,
   - one or more greater-than-X flags (gtX), where X=2,4,6,8.
A 9^{th} embodiment provides the method of the 7^{th} or 8^{th} embodiment, wherein the context mode level coding is continued for all syntax element flags of the coefficients.
A 10^{th} embodiment provides the method of the 7^{th} or 8^{th} embodiment, wherein the context mode level coding is continued only for a subset of the syntax element flags of the coefficients.
An 11^{th} embodiment provides the method of the 10^{th} embodiment, wherein the context mode level coding is continued only for one or more of the plurality of syntax element flags, e.g., the significance flag and/or the sign flag, which are more important than other ones of the plurality of syntax element flags, e.g., the greater-than-one flag (gt1), the parity flag and the greater-than-X flags (gtX).
A 12^{th} embodiment provides the method of any one of the 7^{th} to 11^{th} embodiments, wherein a sign of the coefficient level is context-coded using an associated context, like a CABAC context model.
A 13^{th} embodiment provides the method of the 1^{st} embodiment, wherein, in accordance with a second mode, the context mode level coding is continued when the context budget is exhausted or is below a predefined threshold before the coding of the block starts.
A 14^{th} embodiment provides the method of the 13^{th} embodiment, wherein the one or more or all coefficients in the block are binarized such that a coefficient is decomposed into a first part and a second part, wherein the first parts of the one or more or all coefficients are context-coded, and wherein the second parts of the one or more or all coefficients are non-context mode level coded, e.g., in a Rice-mode.
A 15^{th} embodiment provides the method the 13^{th} or 14^{th} embodiment, wherein an absolute value of a coefficient is a coefficient level, wherein the coefficient level is binarized into one or more syntax element flags and a remaining level, and wherein the first part comprises the one or more syntax element flags and the second part comprises the remaining level.
A 16^{th} embodiment provides the method the 15^{th} embodiment, wherein the one or more syntax element flags comprises one or more of the following:
   - a significance flag (sig-Flag) indicating that a coefficient is significant when it is a non-zero coefficient,
   - a greater-than-one flag (gt1),
   - a parity flag,
   - one or more greater-than-X flags (gtX), where X=2,4,6,8.
A 17^{th} embodiment provides the method the 15^{th} or 16^{th} embodiment, wherein the one or more syntax element flags comprise:
   - the significance flag, or
   - the significance flag and the sign flag, or
   - the significance flag and the greater-than-one flag.
An 18^{th} embodiment provides the method of any one of the 15^{th} to 17^{th} embodiments, wherein the context mode level coding is continued for all syntax element flags of the coefficients.
A 19^{th} embodiment provides the method of any one of the 15^{th} to 17^{th} embodiments, wherein the context mode level coding is continued only for a subset of the syntax element flags of the coefficients.
A 20^{th} embodiment provides the method of the 19^{th} embodiment, wherein the context mode level coding is continued only for one or more of the plurality of syntax element flags, e.g., the significance flag and/or the sign flag, which are more important than other ones of the plurality of syntax element flags, e.g., the greater-than-one flag (gt1), the parity flag and the greater-than-X flags (gtX).
A 21^{st} embodiment provides the method of any one of the 15^{th} to 20^{th} embodiments, wherein a sign of the coefficient level is context-coded using an associated context, like a CABAC context model.
A 22^{nd} embodiment provides the method of any one of the preceding embodiments, wherein all coefficients in the block are context-coded, and wherein the context mode level coding is continued for all coefficients in the block.
A 23^{rd} embodiment provides the method of any one of the preceding embodiments, wherein, for processing the block, only one of the first mode and the second mode is enabled.
A 24^{th} embodiment provides the method of any one of the 1^{st} to 22^{nd} embodiment, wherein, for processing the block, both the first mode and the second mode are enabled, and wherein
   - the first mode is selected for processing the block, when, upon starting the processing or coding of the block, the context budget is not yet exhausted but is not sufficient to have all coefficients in the block context-coded, and
   - the second mode is selected for processing the block, when, upon starting the processing or coding of the block, the context budget is exhausted or is below a predefined threshold.
A 25^{th} embodiment provides the method of any one of the preceding embodiments, wherein the context mode level coding is continued for a predefined duration after the context budget is exhausted.
A 26^{th} embodiment provides the method of any one of the preceding embodiments, wherein the context mode level coding is continued until one or more predefined conditions are fulfilled, and wherein, once the one or more predefined conditions are no longer fulfilled, the coding switches to non-context mode level coding, like a Rice-mode.
A 27^{th} embodiment provides the method of the 26^{th} embodiment, wherein the one or more predefined conditions comprise a certain amount by which the context budget is exceed, and the context mode level coding is continued until the context budget is exceed by the certain amount.
A 28^{th} embodiment provides the method of the 26^{th} or 27^{th} embodiment, wherein the context mode level coding is continued until a number (numCtxBin) of context bins defined by the context budget is exceed by a certain number of context bins.
A 29^{th} embodiment provides the method of the 28^{th} embodiment, wherein the certain number is
   - a fixed number N of context bins, with N being an integer, or
   - a multiple M of the number (numCtxBin) of context bins defined by the context budget, with M being an integer or a fractional number.
A 30^{th} embodiment provides the method of any one of the preceding embodiments, wherein the block is a coefficient group (CG) obtained by decomposing a transform unit (TU).
A 31^{st} embodiment provides the method of any one of the preceding embodiments, wherein the coefficients are coefficients of a Transform Skip (TS) mode or of a Transform Coding mode.
A 32^{nd} embodiment provides a method for decoding a data stream, the data stream including data representing a picture, the method comprising:
   decoding from the data stream the picture,
   wherein decoding the picture comprises processing one or more blocks of the pictures according to any one of the preceding embodiments.
A 33^{rd} embodiment provides a method for encoding a picture into a data stream, the data stream including data representing the picture, the method comprising:
   receiving an original picture, and
   encoding the picture into the data stream,
   wherein encoding the picture comprises processing one or more blocks according to any one of the 1^{st} to 29^{th} embodiments.
A 34^{th} embodiment provides a non-transitory computer-readable storage medium comprising instructions which, when executed by a computer, cause the computer to carry out the method of any one of the preceding embodiments.
A 35^{th} embodiment provides an apparatus of processing one or more blocks of a picture, the apparatus comprising:
   a processing module, wherein the processing module is configured to context mode level code at least a part of one or more or all coefficients in a block in accordance with a context budget, wherein the context mode level coding is continued when the context budget is exhausted.
A 36^{th} embodiment provides an apparatus for decoding a data stream, the data stream including data representing a picture, the apparatus comprising:
   a decoder module configured to decode from the data stream the picture, and
   an apparatus according to the 35^{th} embodiment.
A 37^{th} embodiment provides an apparatus for encoding a picture into a data stream, the data stream including data representing the picture, the apparatus comprising:
   an encoder module configured to receive the original picture and to encode the picture into the data stream, and
   an apparatus according to the 35^{th} embodiment.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

### References

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/doc_end_user/current_document.php?id=10541
[6] Algorithm description of Enhanced Compression Model 12 (ECM 12), https://jvet-experts.org/doc_end_user/current_document.php?id=13915

## Claims

1. A method of processing one or more blocks of a picture, the method comprising:
context mode level coding at least a part of one or more or all coefficients in a block in accordance with a context budget, wherein the context mode level coding is continued when the context budget is exhausted.

2. The method of claim 1, wherein, in accordance with a first mode, the context mode level coding is continued when, at a start of the coding of the block, the context budget is not yet exhausted but is not sufficient to have all coefficients in the block context-coded.

3. The method of claim 2, wherein the one or more or all coefficients in the block are binarized in accordance with a used codec, and the one or more or all coefficients are context-coded without switching to non-context mode level coding, like a Rice-mode.

4. The method of claim 2 or 3, wherein
an absolute value of a coefficient is a coefficient level, wherein the coefficient level is binarized into a plurality of syntax element flags and possibly a remaining-level value, and wherein each of the plurality of syntax element flags is context-coded using an associated context, like a Context-Adaptive Binary Arithmetic Coding (CABAC) context model, and
the plurality of syntax element flags comprises two or more of the following:
- a significance flag (sig-Flag) indicating that a coefficient is significant when it is a non-zero coefficient,
- a greater-than-one flag (gt1),
- a parity flag,
- one or more greater-than-X flags (gtX), where X=2,4,6,8.

5. The method of claim 4, wherein
the context mode level coding is continued for all syntax element flags of the coefficients, or
the context mode level coding is continued only for a subset of the syntax element flags of the coefficients.

6. The method of claim 5, wherein the context mode level coding is continued only for one or more of the plurality of syntax element flags, e.g., the significance flag and/or the sign flag, which are more important than other ones of the plurality of syntax element flags, e.g., the greater-than-one flag (gtl), the parity flag and the greater-than-X flags (gtX).

7. The method of claim 1, wherein, in accordance with a second mode, the context mode level coding is continued when the context budget is exhausted or is below a predefined threshold before the coding of the block starts.

8. The method of claim 7, wherein the one or more or all coefficients in the block are binarized such that a coefficient is decomposed into a first part and a second part, wherein the first parts of the one or more or all coefficients are context-coded, and wherein the second parts of the one or more or all coefficients are non-context mode level coded, e.g., in a Rice-mode.

9. The method claim 7 or 8, wherein
an absolute value of a coefficient is a coefficient level, wherein the coefficient level is binarized into one or more syntax element flags and a remaining level, and wherein the first part comprises the one or more syntax element flags and the second part comprises the remaining level, and
the one or more syntax element flags comprises one or more of the following:
- a significance flag (sig-Flag) indicating that a coefficient is significant when it is a non-zero coefficient,
- a greater-than-one flag (gt1),
- a parity flag,
- one or more greater-than-X flags (gtX), where X=2,4,6,8.

10. The method claim 9, wherein the one or more syntax element flags comprise:
- the significance flag, or
- the significance flag and the sign flag, or
- the significance flag and the greater-than-one flag.

11. The method of claim 9 or 10, wherein
the context mode level coding is continued for all syntax element flags of the coefficients, or
the context mode level coding is continued only for a subset of the syntax element flags of the coefficients.

12. The method of any one of the preceding claims, wherein, for processing the block, only one of the first mode and the second mode or both the first mode and the second mode are enabled, wherein
- the first mode is selected for processing the block, when, upon starting the processing or coding of the block, the context budget is not yet exhausted but is not sufficient to have all coefficients in the block context-coded, and
- the second mode is selected for processing the block, when, upon starting the processing or coding of the block, the context budget is exhausted or is below a predefined threshold.

13. The method of any one of the preceding claims, wherein
the context mode level coding is continued until a number (numCtxBin) of context bins defined by the context budget is exceed by a certain number of context bins, and
the certain number is
- a fixed number N of context bins, with N being an integer, or
- a multiple M of the number (numCtxBin) of context bins defined by the context budget, with M being an integer or a fractional number.

14. A non-transitory computer-readable storage medium comprising instructions which, when executed by a computer, cause the computer to carry out the method of any one of the preceding claims.

15. An apparatus of processing one or more blocks of a picture, the apparatus comprising:
a processing module, wherein the processing module is configured to context mode level code at least a part of one or more or all coefficients in a block in accordance with a context budget, wherein the context mode level coding is continued when the context budget is exhausted.
